(19) Europäisches Patentamt
European Patent Office
Office européen des brevets

(11) Veröffentlichungsnummer: **0 144 706**
**B1**

(12) # EUROPÄISCHE PATENTSCHRIFT

(45) Veröffentlichungstag der Patentschrift: **23.03.88**

(51) Int. Cl.$^4$: **C 09 B 62/01**, D 06 P 3/10, D 06 P 3/66

(21) Anmeldenummer: **84113034.7**

(22) Anmeldetag: **30.10.84**

(54) **Polyazoreaktivfarbstoffe.**

(30) Priorität: **10.11.83 DE 3340590**

(43) Veröffentlichungstag der Anmeldung: **19.06.85 Patentblatt 85/25**

(45) Bekanntmachung des Hinweises auf die Patenterteilung: **23.03.88 Patentblatt 88/12**

(84) Benannte Vertragsstaaten: **CH DE FR GB LI**

(56) Entgegenhaltungen:
**EP-A- 0 043 411**
**DE-A- 1 419 173**
**DE-A- 1 419 791**
**DE-A- 2 106 648**
**CHEMICAL ABSTRACTS, Band 95, Nr. 2, Juli 1981, Seite 71, Nr. 26598n, Columbus, Ohio, US;**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Herd, Karl Josef, Dr.**
**Buchholzstrasse 32**
**D-5000 Koeln 80 (DE)**
Erfinder: **Michna, Martin, Dr.**
**Silesiusstrasse 74**
**D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 144 706 B1

Jouve, 18, rue St-Denis, 75001 Paris, France

**Beschreibung**

Gegenstand der vorliegenden Erfindung sind neue Reaktivfarbstoffe der Formel

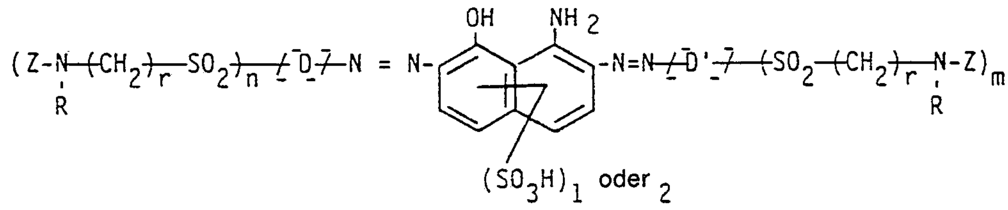

(1)

worin

D, D' = ggf. weitere Azogruppen enthaltender Rest der Benzol-, Naphthalin- oder heterocyclischen Reihe

R = H, ggf. substituiertes $C_1$-$C_4$-Alkyl, ggf. substituiertes $C_2$-$C_4$-Alkylen oder ggf. substituiertes Phenylalkylen

Z = faserreaktiver Rest der Halogenpyrimidin- oder Halogentriazinreihe, 2,3-Dichlorchinoxalin-6-carbonyl- oder 2,3-Dichlorchinoxalin-6-sulfonyl-Rest

n, m = 0 oder 1, wobei n + m = 1 oder 2

r = 2 oder 3

insbesondere solche der Formel

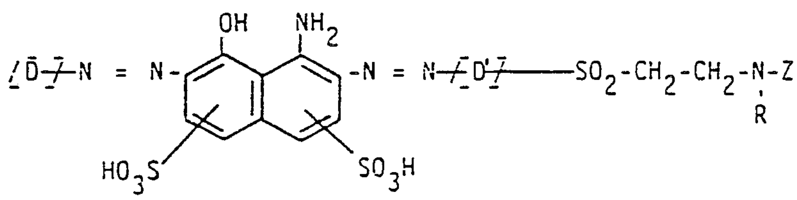

(2)

wobei D, D', R und Z die oben angegebene Bedeutung haben und solche der Formel (2) in denen D für einen Naphthalin-mono- oder disulfonsäurerest der Formel

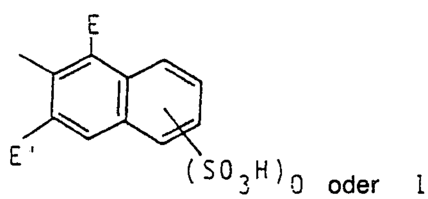

(2a)

steht, worin einer der Reste E und E' für H, der andere für $SO_3H$ steht, oder D für einen Azobenzolsulfonsäure-Rest der Formel

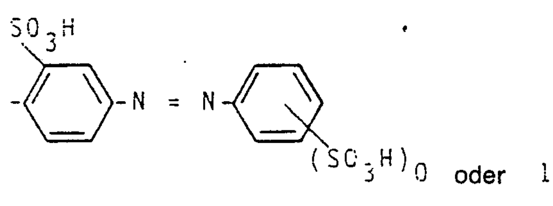

(2b)

steht, R und Z die oben angegebene Bedeutung haben und D' für gegebenenfalls durch $C_1$-$C_4$-Alkoxy substituiertes Phenylen oder gegebenenfalls durch Sulfo substituiertes Naphthylen steht, sowie die Verwendung der neuen Reaktivfarbstoffe zum Färben und Bedrucken von hydroxyl- oder amidgruppenhaltigem Textilmaterial und die damit gefärbten oder bedruckten Textilmaterialien.

Als Reste R der Formel (1) und (2) kommen vorzugsweise Wasserstoff und gegebenenfalls durch OH, Halogen (insbesondere Cl), $SO_3H$, $OSO_3H$, COOH, $C_1$-$C_4$-Alkoxy (insbesondere Methoxy) substituiertes $C_1$-$C_4$-Alkyl oder $C_2$-$C_4$-Alkylen oder gegebenenfalls durch $SO_3H$ substituiertes Phenylalkylen mit 1 bis 4 C-Atomen im Alkylteil in Frage. Folgende Reste R seien im folgenden genannt:

$CH_3$, $C_2H_5$, -n-$C_3H_7$, -iso-$C_3H_7$, -n-$C_4H_9$, -iso-$C_4H_9$, $-CH_2-CH=CH_2$, $-CH_2CH_2OH$,

$-CH_2CH_2-Cl$, $-CH_2-CH_2-SO_3H$, $-CH_2-CH_2-OSO_3H$, $-CH_2CH_2-CO_2H$, $-CH_2-CO_2H$, $-CH(CH_3)-CO_2H$, $CH_2-CH_2-OCH_3$, $-CH_2-CH(OH)-CH_3$, $CH_2-CH_2-CH(OH)CH_3$, $CH_2-CH_2-CH_2-CO_2H$,

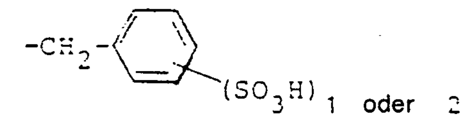

Als geeignete faserreaktive Reste sind beispielsweise zu nennen :

Mono- oder Dihalogen-symmetrische-triazinylreste, z. B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlortriazinyl-6-, 2-Alkylmercapto- oder 2-Arylmercapto- oder 2-(substituiertes Aryl)-mercapto-4-chlortriazinyl-6-, wie 2-β-hydroxyethylmercapto-4-chlortriazinyl-6-, 2-Phenylmercapto-4-chlortriazinyl-6-, 3-(4'-Methylphenyl)-mercapto-4-chlor-triazinyl-6-, 2-(2',4'-Dinitro)-phenylmercapto-4-chlortriazinyl-6-, 2-(2',4'-Dinitro)-phenylmercapto-4-chlortriazinyl-6-, 2-Methyl-4-chlortriazinyl-6-, 2-Phenyl-4-chlor-triazinyl-6-, 2,4-Difluortriazinyl-6, Monofluortriazinylreste, die durch Amino-, Alkylamino-, Aralkylamino, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls durch Sulfo-, Alkyl-, insbesondere $C_1$-$C_4$-Alkyl, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-ethylphenyl)-amino-4-fluor-triazinyl-6, 2-(N-β-Hydroxyethylphenyl)-amino-4-fluor-triazinyl-6, 2-(N-iso-propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl)-(2'))-4-fluor-triazinyl-6, 2(3',6'-Disulfonaphthyl-(1'))-4-fluor-triazinyl-6, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -die- oder -tri-chlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluoropyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, N-Methyl-N-(2,4-Dichlortriazinyl-6-)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluor-methyl-4-pyrimidinyl-, 2-Fluor-5-phenyl- oder -5-methyl-sulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; 2-(3'-Carboxyphenyl)-sulfonyl-4-chlortriazinyl-6-, 2-(3'-Sulfophenyl)-sulfonyl-4-chlortriazinyl-6-.

Die Farbstoffe der Formel (1) sind erhältlich, indem man Amine der Formel.

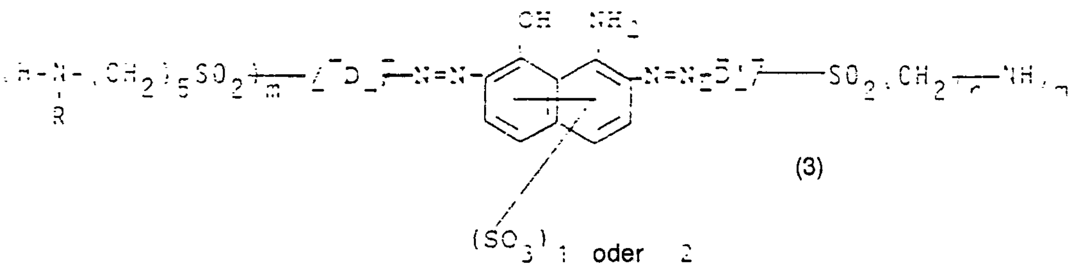

(3)

mit einer reaktiven Verbindung der Struktur

Z—L (4)

wobei L eine Austrittsgruppe wie z. B. F, Cl, Br darstellt und Z die unter Formel (1) genannte Bedeutung besitzt, unter bekannten Bedingungen kondensiert oder indem man Anilinderivate der Struktur

$H_2N—[D]—(SO_2(CH_2)_r—N—Z)_m$ (5)

in bekannter Weise diazotiert und auf Kupplungskomponenten der Formel

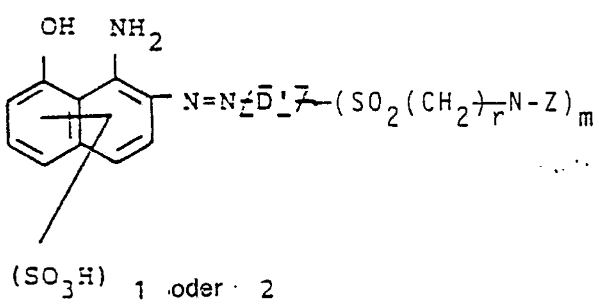

(6)

kuppelt.

Reaktivfarbstoffe der Formel (2) sind erhältlich, indem man Amine der Formel

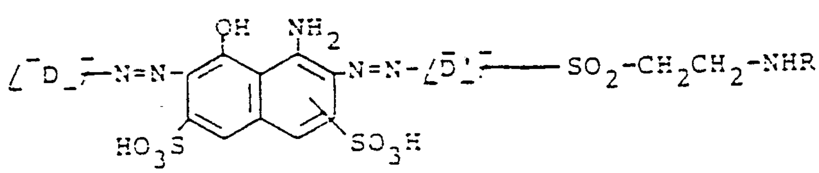

(7)

mit einer reaktiven Verbindung der Struktur (4) unter bekannten Bedingungen kondensiert oder indem man Anilinderivate der Formel (8)

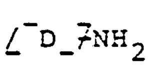

(8)

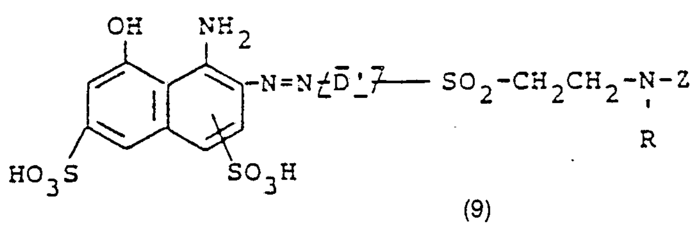

(9)

in bekannter Weise diazotiert und auf Kupplungskomponenten der Formel (9) kuppelt.

Die Farbstoffzwischenprodukte der Formel (7) sind erhältlich, indem man Chromophore der Struktur

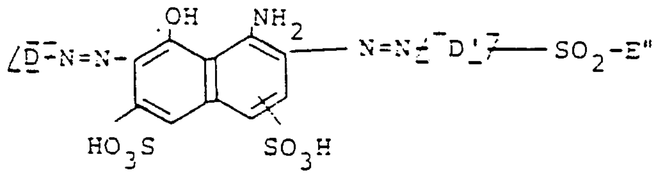

(10)

wobei E″=—CH=$CH_2$ oder —$CH_2$—$CH_2$—T und T=OH, Cl, Br, $OSO_3H$, $SSO_3H$, $OP(OH)_2$, $OCOCH_3$ und $OCO_2CH_3$ mit überschüssigem Ammoniak oder einem Amin der Formel R—$NH_2$ umsetzt.

Eine spezielle Variante zur Herstellung von Farbstoffzwischenprodukten der Formel (10), wobei D der Formel (2a) oder der Formel (2b) entspricht, D′ für einen Rest der Benzolreihe steht und E″ die unter Formel (10) angegebene Bedeutung besitzt besteht darin, daß man im Sinne eines sogenannten « Eintopfverfahrens » beide Diazokomponenten D—$NH_2$ und $H_2N$—[D]—$SO_2$—E″ gemeinsam diazotiert, die neutrale Lösung der 8-Amino-1-hydroxynaphthalin-3,6 (bzw. 3,5)-disulfonsäure zudosiert und den pH-Wert der Mischung langsam von 0,5-1,5 auf 5,5-6,5 erhöht.

Dabei erfolgt zunächst im sauren pH-Bereich Kupplung von diazotiertem $H_2N$—[D′]—$SO_2$E″, oberhalb pH 4, dann Kupplung von diazotiertem D—$NH_2$. Es resultiert ein einheitliches Farbstoffzwischenprodukt der Formel (10).

Die Darstellung der Farbstoffvor- und Zwischenprodukte, wie z. B. der Verbindungen der Formel (2), (5), (6), (7) und (9) kann wie folgt durchgeführt werden :

Alkylierung von Thiophenolen oder Benzolsulfinaten der Formel

$$H_3C—CO—HN—[D]—SH \quad (11)$$

$$H_3—CO—HN—[D]—SO_2Na \quad (12)$$

(wobei in den Formeln (11) und (12) an Stelle von D auch D′ stehen kann mit Verbindungen der Formel R—NH—$(CH_2)_p$—$CH_2$—$OSO_3H$, wobei p = 1 oder 2) oder z. B. auch mit Ammoniumsalzen der Formel

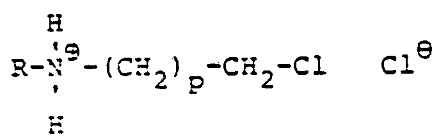

(wobei p = 0, 1, 2 oder 3),
gegebenenfalls nachfolgende Oxidation mit z. B. $H_2O_2$ und anschließende Verseifung der Acetyl-Schutzgruppe.

Ein weiterer Weg zur Herstellung von Zwischenprodukten beinhaltet z. B. die Alkylierung entsprechender Nitrobenzolsulfinate (13)

$$O_2N—[D]—SO_2Na \quad (13)$$

(wobei in der Formel (13) an Stelle von D auch D′ stehen kann)
mit Verbindungen der Formel R—$NH(CH_2)_pCH_2OSO_3H$ oder z. B. auch mit Ammoniumsalzen der Formel

$$R—\overset{\oplus}{N}H_2(CH_2)_pCH_2Cl\ Cl^{\ominus}$$ (wobei p = 1 oder 2)

und nachfolgende Reduktion der Nitrofunktion.

Hierdurch läßt sich beispielsweise das Anilinderivat (14) herstellen :

$$H_2N—[D]—SO_2—(CH_2)_r—NHR \quad (14)$$

wobei an Stelle von D auch D′ stehen kann.

Als Beispiele für die Verbindungen der Formel (14) seien aufgeführt :

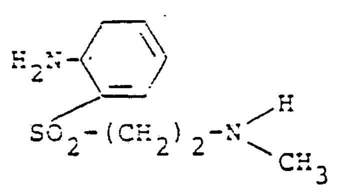
,

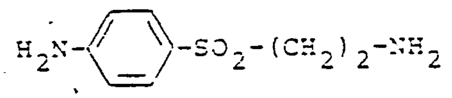
,

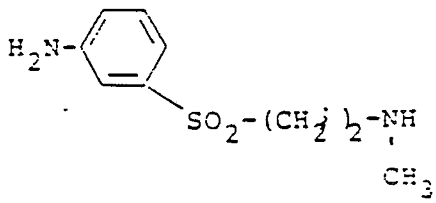
,
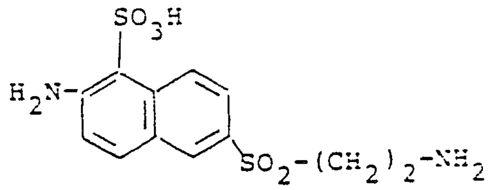

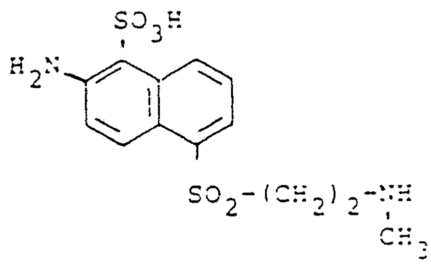

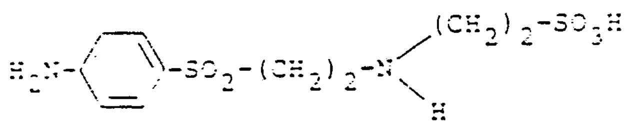

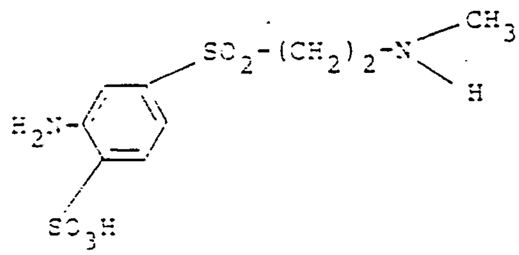

Andere gebräuchliche Herstellungsverfahren der Derivate (14) sind z. B. in folgenden Publikationen beschrieben :

J. Chem. Soc. [London] 1945, 826 ;
J. Org. Chem. 15, 413 (1950)
Biochem. J. 39, 85 (1945).

Die oben aufgeführten Syntheseschritte lassen sich u. a. auf die Darstellung von Naphthylamin-Derivaten der Formel (15) anwenden :

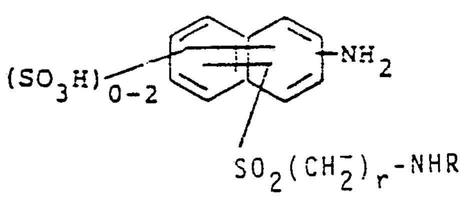
(15)

Eine andere Synthesevariante für die Verbindungen (14) mit R = H besteht z. B. auch in der Alkylierung der Vorstufen (11) bis (13) mit Acrylnitril, Methacrylnitril, 2-Butensäurenitril und nachfolgende Reduktion der Cyano- sowie der Nitrogruppierung bzw. abschließende Verseifung der Acylaminogruppierung, wie es z. B. in der veröffentlichten Brit. Patentanmeldung Nr. 2 088 359 beschrieben wird.

Eine weitere Synthesemöglichkeit für die Aminoverbindung (14) mit r = 2 besteht in der Umsetzung von Verbindungen der Struktur (16) bis (18), wie sie z. B. in den deutschen Offenlegungsschriften 1 943 904, 2 142 727, 2 142 728, 2 748 975 bzw. der veröffentlichten japanischen Patentanmeldung Nr. 43501/1973 genannt werden,

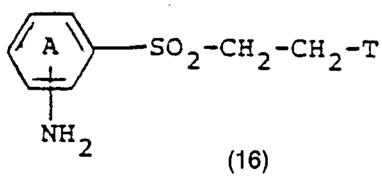

(16)

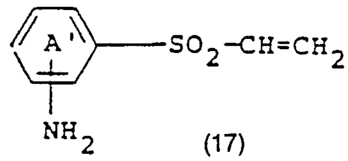

(17)

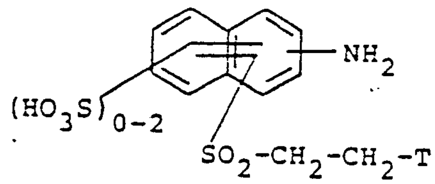

(18)

wobei die Benzolringe A und A' gegebenenfalls noch weitere Substituenten (z. B. Halogen-, Hydroxy-, Alkyl-, Alkoxy-, Carboxy- oder Sulfo-Substituenten) tragen können und wobei T = OH, Cl, Br, $OSO_3H$, $SSO_3H$, $OPO(OH)_2$, $OCOCH_3$, $OCO_2CH_3$, mit einem Überschuß an Ammoniak oder primärem aliphatischen Amin der Formel $RNH_2$ bei 20-100 °C. Dieses Syntheseprinzip ist z. B. aus der deutschen Offenlegungsschrift 1 943 904 (Bsp. 4) und der japanischen Patentanmeldung 07923/1973 [CA 84 : 148 968 c (1973)] bekannt.

Durch Diazotieren der Aminoverbindung (14) und Kupplung auf 1-Amino-8-naphthol-mono- oder disulfonsäuren unter sauren Bedingungen sowie nachfolgende zweite Kupplung unter neutralen oder basischen Bedingungen bzw. durch Kupplung der diazotierten Aminoverbindung (14) auf bereits angekuppelte 1-Amino-8-naphthol-mono- oder disulfonsäuren, lassen sich z. B. Farbstoffvorstufen, wie sie unter den Formeln (3) und (7) aufgeführt sind, aufbauen.

Diese Chromophore (3) mit r = 2 und (7) sind auch darstellbar, indem man die Einführung des aliphatischen Aminrestes mit Ammoniak oder mit $RNH_2$ direkt aus chromophoren Verbindungen der Formel (19) bis (22) vornimmt.

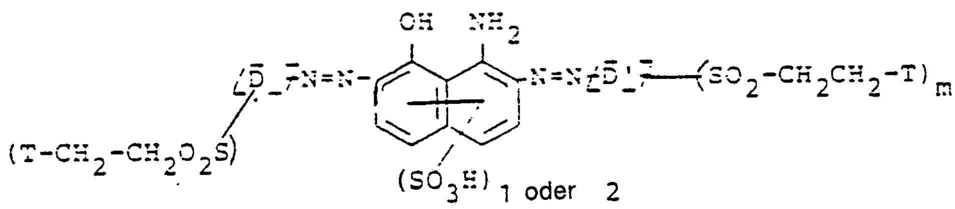

(19)

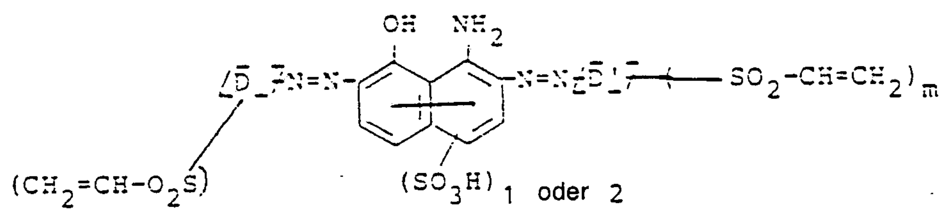

(20)

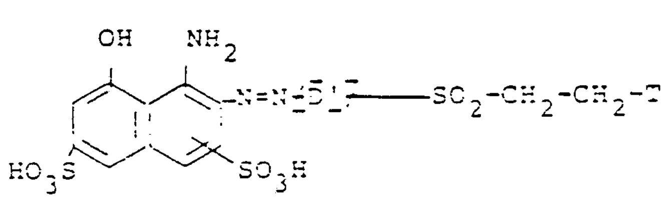

(21)

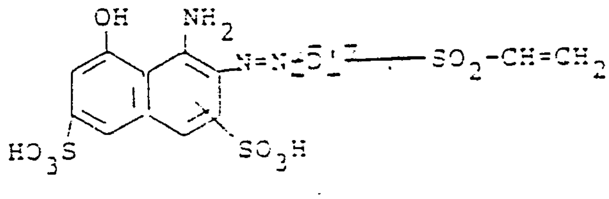
(22)

Die Darstellung der Farbstoffvorstufen (5), (6) bzw. (9) erfolgt in bekannter Weise durch Kondensation der Verbindungen der Formel (23), (24) bzw. (25) mit reaktiven Verbindungen der Struktur Z—L (4).

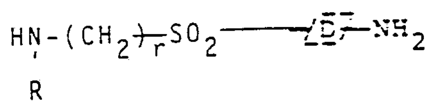
(23)

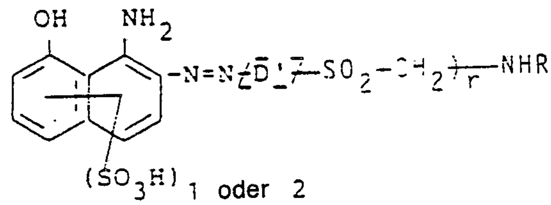
(24)

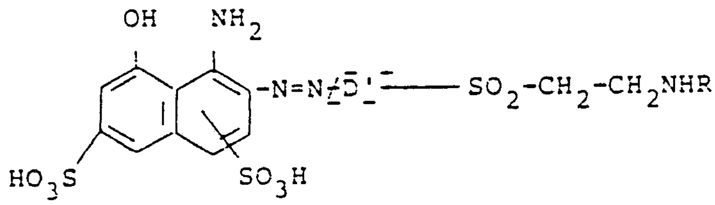
(25)

Verbindungen der Struktur (23) sind z. B. auch die Amine der Formel (14) bis (15).

Weitere Einzelheiten zur Darstellung, z. B. auch die der Zwischenprodukte, sind den nachfolgenden Beispielen zu entnehmen.

Mit den beanspruchten Dis-, Tris- und Polyazoreaktivfarbstoffen lassen sich auf hydroxyl- oder amidgruppenhaltigen Textilmaterialien nach bekannten Verfahren marineblaue und grüne bis schwarze Drucke und Färbungen anfertigen, die ein hohes Echtheitsniveau aufweisen.

Konstitutionell nächstvergleichbare Polyazo-Farbstoffe mit Gruppierungen $-SO_2N$-Alkylen-N-Reaktivrest anstelle von Gruppierungen $-SO_2(CH_2)_r-N$-Reaktivrest werden in der DE-A-1 419 791 beschrieben.

Beispiel 1

98,0 g des Farbstoffes der Formel

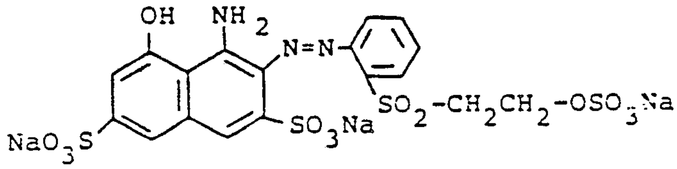
(a)

werden neutral in 300 ml Wasser gelöst und zügig mit 150 ml 30 %iger wäßriger Methylaminlösung versetzt. Zur Entfernung des überschüssigen Methylamins stellt man die Reaktionslösung entweder sauer und isoliert die ausgefallene β-(N-Methylamino)ethylsulfonylverbindung durch Filtration oder aber man stellt mit Natronlauge auf pH 12 und bringt die Lösung für 30 min zum Kochen. Die Farbstoffpaste wird in 300 ml Wasser neutral gestellt — bzw. die alkalische Farbstofflösung nach dem Abkühlen neutralisiert — und mit 100 g fester Soda versetzt. Dazu fügt man eine wäßrige Suspension von diazotierter 2-Amino-1,5-naphthalindisulfonsäure (44,0 g) und rührt eine Stunde nach. Zu dieser tiefblauen Lösung fügt man 100 g

Eis und danach 26,0 g 5-Chlor-2,4,6-trifluorpyridimidin und hält den pH der Reaktionslösung durch Zugabe fester Soda zwischen 7 bis 8. Nach 2-stündigem Rühren versetzt man mit 50 g Kochsalz und saugt nach einer weiteren Stunde ab. Nach dem Trocknen erhält man ein schwarzblaues Pulver des Farbstoffes der Formel (b), $\lambda_{max}$ = 620 nm (in $H_2O$),

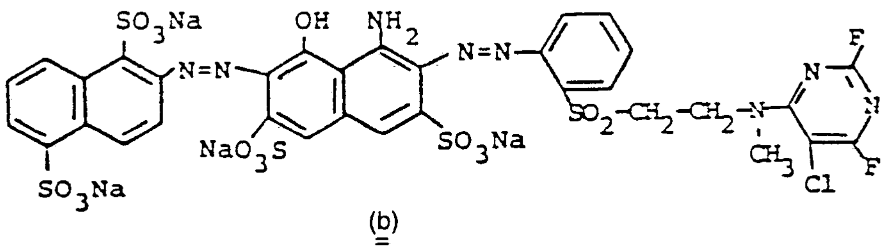

(b)

der auf Baumwolle eine oxidationsbeständige grünstichig blaue Färbung ergibt.

Der gleiche Farbstoff (b) ist auch darstellbar, indem man die Lösung von 98,0 g des Monoazofarbstoffes (a) mit einer wäßrige Suspension von diazotierter 2-Amino-1,5-naphthalindisulfonsäure (44,0 g) zum blauen Disazofarbstoff umsetzt. Dabei hält man den pH der Lösung durch Zugabe von festem Natriumhydrogencarbonat konstant zwischen pH 5,5 bis 6,5. Anschließend versetzt man zügig mit 150 ml 30 %iger wäßriger Methylaminlösung, rührt 30 Minuten nach, stellt mit Salzsäure auf pH 0,5 und isoliert den ausgefallenen Farbstoff durch Filtration. Diese Paste wird dann in 250 ml Wasser neutral gelöst und mit 26,0 g 5-Chlor-2,4,6-trifluorpyrimidin in üblicher Weise zum fertigen Farbstoff (b) kondensiert.

Eine noch einfachere Darstellungsvariante ist folgende : Eine Mischung aus 38,5 g o-Aminophenyl-β-sulfatoethylsulfon und 44,0 g 2-Amino-1,5-naphthalindisulfonsäure in 400 ml Wasser, 80 ml Salzsäure und 200 g Eis wird bei 0-5 °C mit 68 ml 30 %iger Natriumnitritlösung diazotiert. Die Suspension wird 1 Stunde bei 5 °C nachgerührt und der Nitritüberschuß durch Zugabe von 3 ml Amidosulfonsäure entfernt. Dazu tropft man langsam eine neutrale Lösung von 46,0 g 1-Amino-8-hydroxy-3,6-naphthalindisulfonsäure in 100 ml Wasser und stellt danach mit Sodalösung auf pH 1,0. Nach weiteren 2 Stunden Rühren bei 5-10 °C wird der pH der Reaktionslösung durch weitere Zugabe von Sodalösung langsam auf 6,0 erhöht und bei diesem Wert solange gehalten, bis eine klare blaue Lösung resultiert. Danach versetzt man zügig mit einer Mischung aus 100 ml 30 %iger wäßriger Methylaminlösung/10 ml konz. Natronlauge, rührt weitere 30 Minuten nach, stellt mit Salzsäure auf pH 0,5 und isoliert den ausgefallenen blauen Farbstoff durch Filtration. Diese Paste wird dann, wie oben beschrieben, mit 5-Chlor-2,4,6-trifluorpyrimidin kondensiert.

Verwendet man anstelle von 5-Chlor-2,4,6-trifluorpyrimidin andere Reaktivkomponenten bzw. anstelle von Methylamin Ammoniak oder andere Amine, so lassen sich folgende Farbstoffe, die alle nahezu die gleiche Nuance wie (b) aufweisen, herstellen.

Tabelle 1

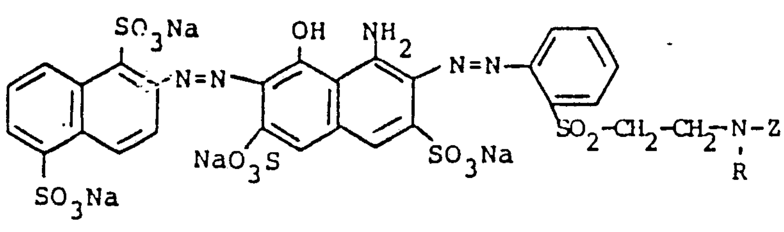

| Bsp. | 2 | 3 | 4 | 5 |
|---|---|---|---|---|
| R | H | $CH_3$ | H | H |
| Z | 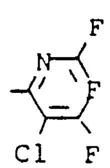 | 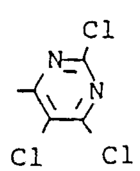 | 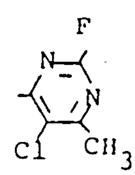 | 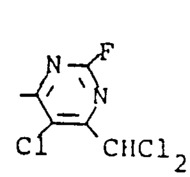 |

Tabelle 1 (Fortsetzung)

| Bsp. | 6 | 7 | 8 | 9 |
|---|---|---|---|---|
| R | H | $CH_3$ | $CH_2CH_2-SO_3Na$ | $CH_3$ |
| Z | 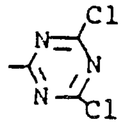 | 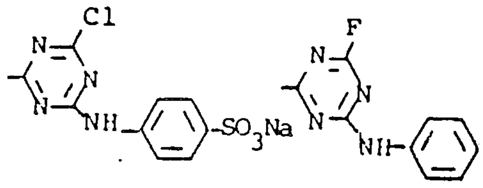 | | 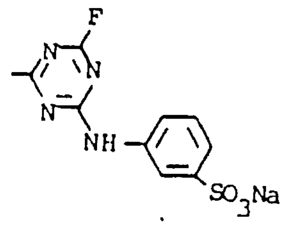 |

Nuancenverschiebungen lassen sich durch die Änderung der zweiten Diazokomponente erzielen. Setzt man anstelle von 2-Amino-1,5-naphthalindisulfonsäure Verbindungen der Struktur $D-NH_2$ ein, so lassen sich folgende Farbstofftypen isolieren.

Tabelle 2

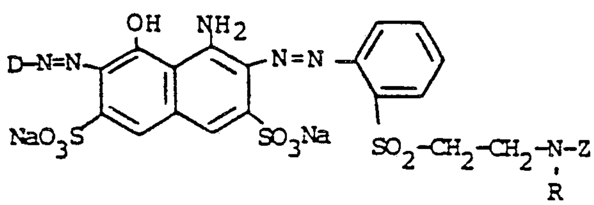

| Bsp. | D | R | Z | Nuance ($\lambda_{max}$) |
|---|---|---|---|---|
| 10 | 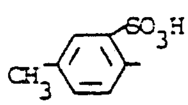 | $CH_3$ | 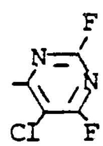 | marineblau (607 nm) |
| 12 | 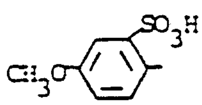 | H | " | grünst. blau (622 nm) |
| 12 | 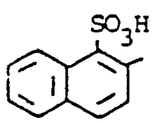 | $CH_3$ | " | grünst. blau (618 nm) |
| 13 | 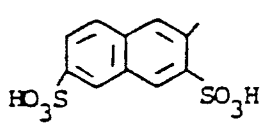 | $CH_3$ | " | grünst. blau (620 nm) |
| 14 | 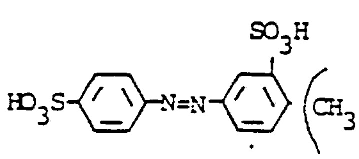 | | 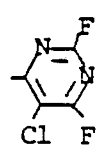 | grünst. schwarz (630 nm) |
| 15 | " | $CH_3$ | 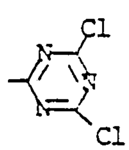 | grünst. schwarz (628 nm) |

(Fortsetzung)

| Bsp. | D | R | Z | Nuance ($\lambda_{max}$) |
|---|---|---|---|---|
| 16 | 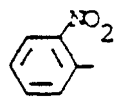 | $CH_2CH_2$-$SO_3Na$ | 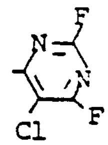 | grünst. schwarz (631 nm) |
| 17 | 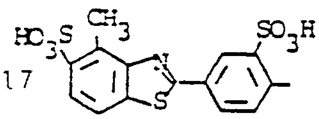 | $CH_3$ | " | grünst. blau (629 nm) |

Beispiel 18

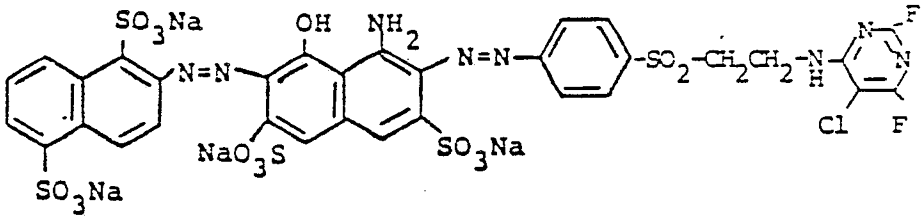

Der obige dunkelblaue Reaktivfarbstoff ist in Analogie zu Beispiel 1 darstellbar. Beispielhaft soll aber eine weitere Synthesevariante beschrieben werden :

29,0 g (2'-Aminoethyl)-(4'-aminophenyl)sulfon werden in 200 ml Salzsäure, 100 ml Wasser und 100 g Eis gelöst und tropfenweise mit 35 ml 30 %iger Natriumnitritlösung versetzt ; man rührt eine Stunde bei 0-5 °C nach und entfernt den Nitritüberschuß. Zu dieser Lösung tropft man langsam eine Lösung von 8-Amino-1-hydroxynaphthalin-3,6-disulfonsäure in 100 ml Wasser/15 ml konzentrierte Natronlauge und setzt das Rühren für 3 Stunden fort. Danach stellt man durch tropfenweise Zugabe von verdünnter Natronlauge auf pH 6, fügt 100 g feste Soda zu und kuppelt und konzentriert zum dunkelblauen Farbstoff ($\lambda_{max}$ = 615 nm), wie unter Beispiel 1 beschrieben.

Auch hier lassen sich durch Auswahl der Komponenten D—$NH_2$ und Z—L eine Reihe neuer Reaktivfarbstoffe darstellen.

Tabelle 3

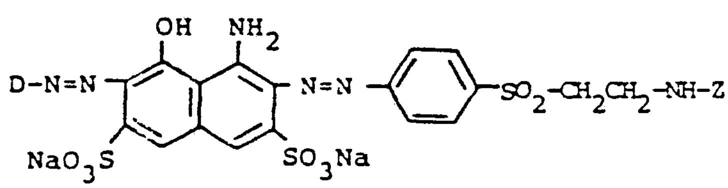

| Bsp. | D | Z | Nuance ($\lambda_{max}$) |
|---|---|---|---|
| 19 | 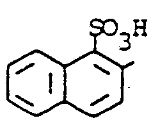 | 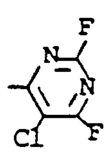 | grünst. blau (614 nm) |
| 20 | 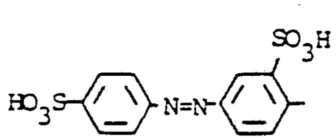 | " | grünst. schwarz (628 nm) |

(Fortsetzung)

| Bsp. | D | Z | Nuance ($\lambda_{max}$) |
|---|---|---|---|
| 21 | " | 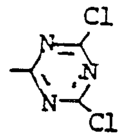 | grünst. schwarz (626 nm) |
| 22 | " | 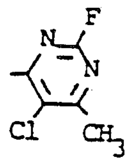 | grünst. schwarz (628 nm) |

Beispiel 23

Ausgehend von 98,0 g des Monoazofarbstoffes der Formel (c)

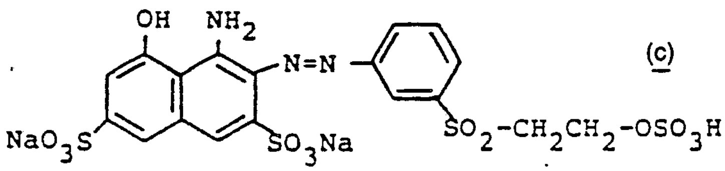

(c)

erhält man einen neuen klaren marineblauen Reaktivfarbstoff der Struktur (d), wenn man alle Umsetzungen wie in Beispiel 1 durchführt.

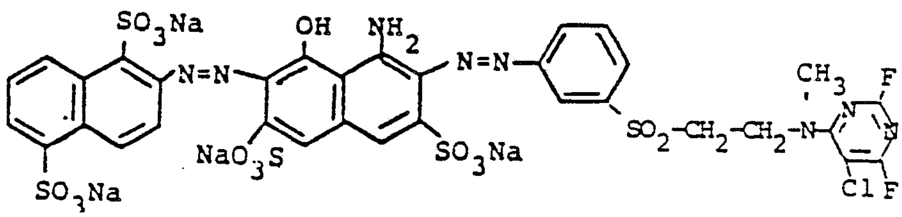

(d, $\lambda_{max}$ = 605 nm)

Durch Änderung des Amins R—$NH_2$ bzw. der Reaktivkomponente sind folgende Farbstofftypen herstellbar.

Tabelle 4

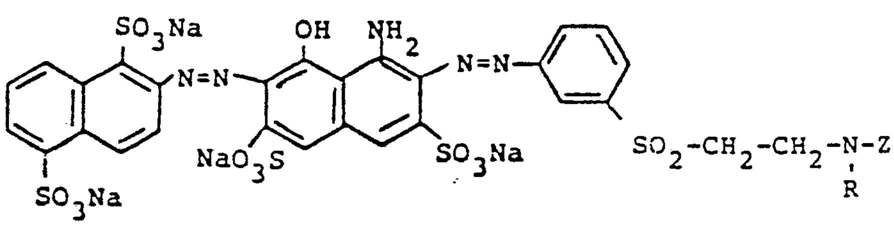

| Bsp. | 24 | 25 | 26 |
|---|---|---|---|
| R | H | $CH_3$ | $C_2H_5$ |
| Z | 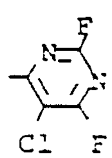 | 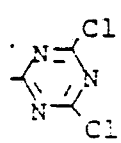 | 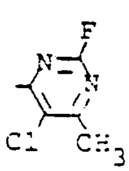 |

Durch Variation und Kombination von bereits mehrfach genannten Reaktionspartnern sowie von noch nicht genannten Komponenten $D—NH_2$, $H_2N—D'—SO_2(CH_2)_r—NRZ$ oder 8-Amino-1-naphthol-3,5-disulfonsäure ist die Synthese weiterer neuer Reaktivfarbstoffe möglich, wie z. B.

Bsp. 27

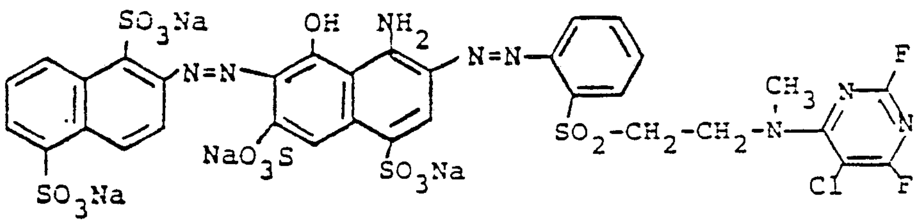

marineblau

Bsp. 28

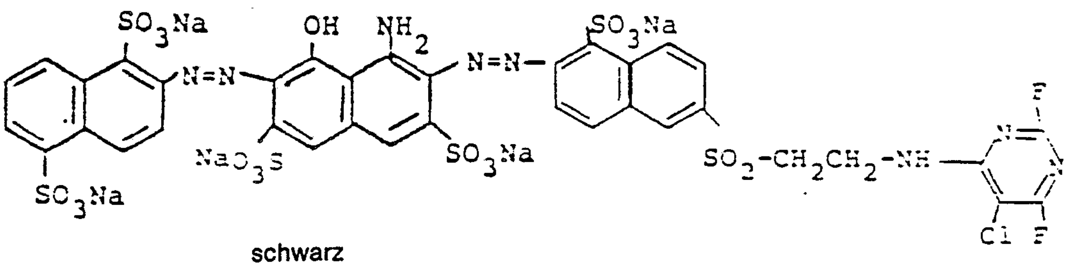

schwarz

Bsp. 29

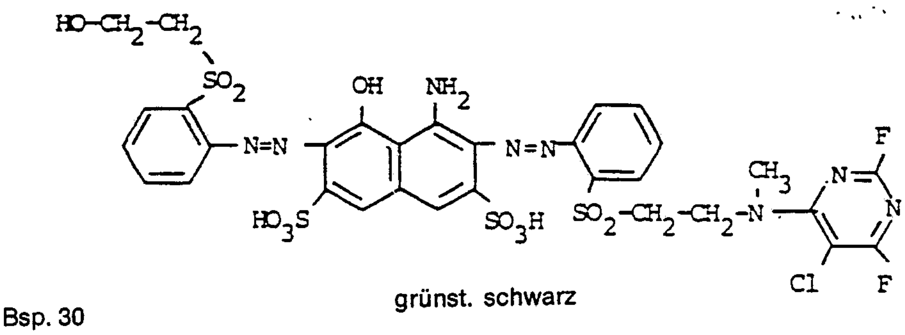

grünst. schwarz

Bsp. 30

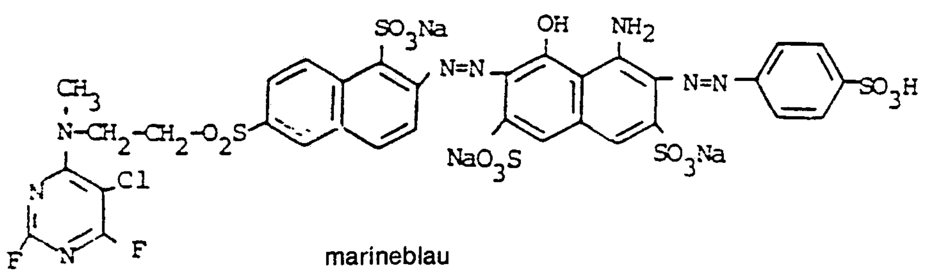

marineblau

Bsp. 31

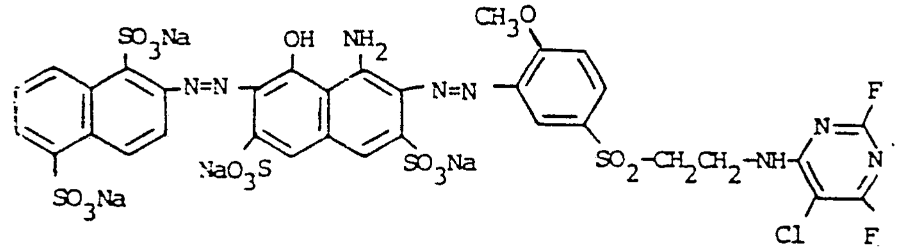

grünst. dunkelblau

(Fortsetzung)

Bsp. 32

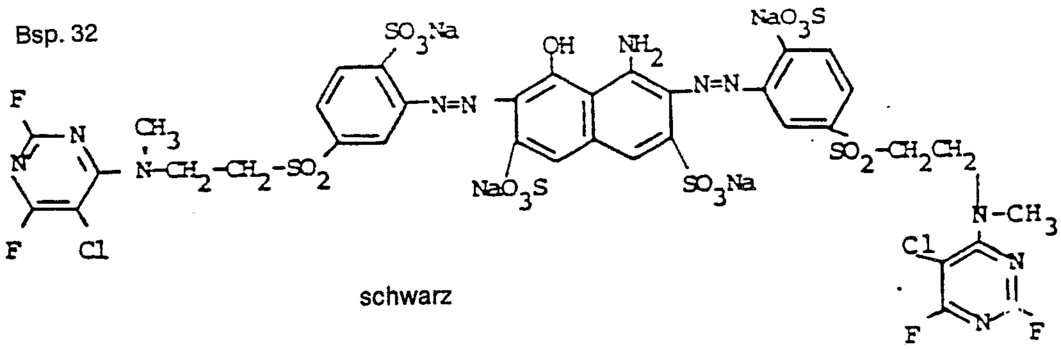

schwarz

Bsp. 33

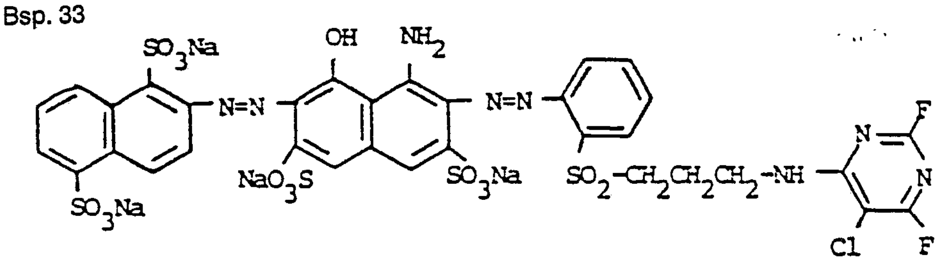

grünst. blau

Färbevorschrift

In einem Färbebecher von 300 ml Inhalt, der sich in einem beheizbaren Wasserbad befindet, werden 170 ml Wasser von 20-25 °C vorgelegt. Man teigt 0,6 g des nach Beispiel 1 erhaltenen Farbstoffes mit 2 ml kaltem Wasser gut an und fügt 30 ml heißes Wasser (70 °C) zu ; dabei löst sich der Farbstoff auf. Diese Lösung wird dem vorgelegten Wasser zugegeben und 10 g Baumwollgarn in dieser Färbeflotte ständig in Bewegung gehalten. Innerhalb von 10 Minuten erhöht man die Temperatur der Färbeflotte auf 40-50 °C, setzt 10 g wasserfreies Natriumsulfat zu und färbt 30 Minuten weiter. Dann fügt man der Färbeflotte 4 g wasserfreies Natriumcarbonat zu und färbt 60 Minuten bei 40 bis 50 °C. Man entnimmt das gefärbte Material der Färbeflotte, entfernt die anhaftende Flotte durch Auswringen oder Abpressen und spült das Material zunächst mit kaltem Wasser und dann mit heißem Wasser so lange, bis die Spülflotte nicht mehr ausgeblutet wird. Anschließend wird das gefärbte Material in 200 ml einer Flotte, die 0,2 g Natriumalkylsulfat enthält, während 20 Minuten bei Siedetemperatur geseift, erneut gespült und bei 60-70° in einem Trockenschrank getrocknet. Man erhält eine tief dunkelblaue Färbung von hervorragender Wasch- und Chlorechtheit.

**Patentansprüche**

1. Reaktivfarbstoffe der Formel

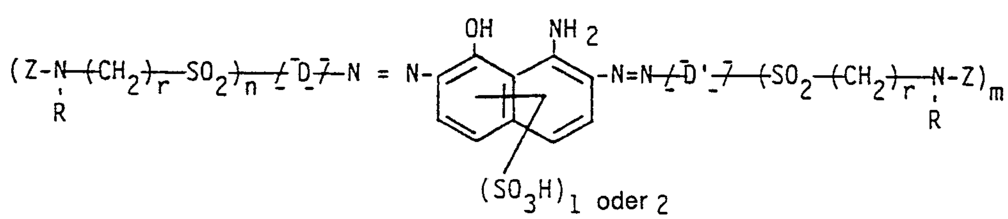

worin

D, D' = ggf. weitere Azogruppen enthaltender Rest der Benzol-, Naphthalin- oder heterocyclischen Reihe

R = H, ggf. substituiertes $C_1$-$C_4$-Alkyl, ggf. substituiertes $C_2$-$C_4$-Alkylen oder ggf. substituiertes Phenylalkylen

Z = faserreaktiver Rest der Halogenpyrimidin- oder Halogentriazinreihe, 2,3-Dichlorchinoxalin-6-carbonyl- oder 2,3-Dichlorchinoxalin-6-sulfonyl-Rest

n, m = 0 oder 1, wobei n + m = 1 oder 2
r = 2 oder 3

2. Reaktivfarbstoffe gemäß Anspruch 1 der Formel

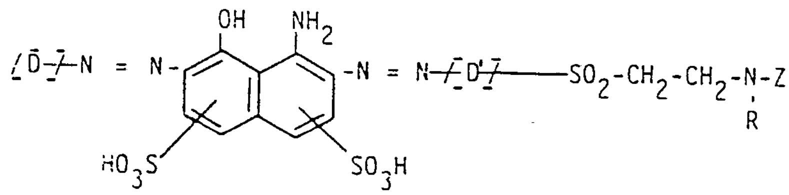

wobei D, D', R und Z die in Anspruch 1 angegebene Bedeutung haben.

3. Reaktivfarbstoffe gemäß Anspruch 2, dadurch gekennzeichnet, daß D für einen Naphthalinmono- oder disulfonsäurerest der Formel

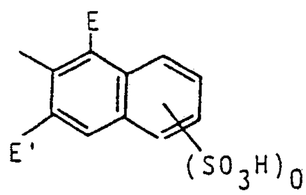

oder 1

steht, worin einer der Reste E und E' für H, der andere für $SO_3H$ steht, oder daß D für einen Azobenzolsulfonsäure-Rest der Formel

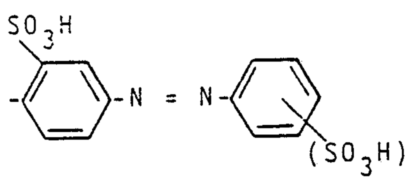

oder 1

steht, R und Z die im Anspruch 2 angegebene Bedeutung haben und D' für gegebenenfalls durch $C_1$-$C_4$-Alkoxy substituiertes Phenylen steht oder gegebenenfalls durch Sulfo substituiertes Naphthylen steht.

4. Verwendung von Reaktivfarbstoffen gemäß Anspruch 1 zum Färben und Bedrucken von hydroxyl- oder amidgruppenhaltigem Textilmaterial.

5. Mit Reaktivfarbstoffen gemäß Anspruch 1 gefärbtes oder bedrucktes hydroxyl- oder amidgruppenhaltiges Textilmaterial.

## Claims

1. Reactive dyestuffs of the formula

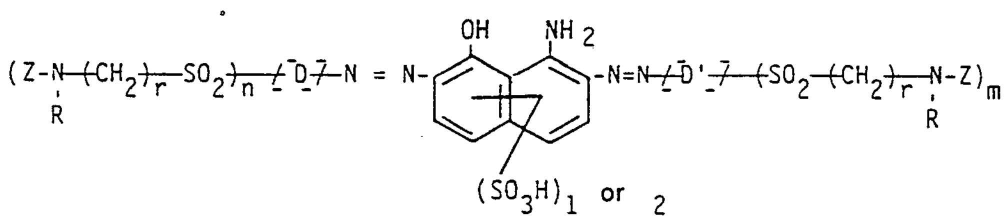

or 2

wherein

D, D' = a radical, optionally containing further azo groups, from the benzene, naphthalene or heterocyclic series,

R = H, optionally substituted $C_1$-$C_4$-alkyl, optionally substituted $C_2$-$C_4$-alkylene or optionally substituted phenylalkylene,

Z = a fibre-reactive radical of the halogenopyrimidine or halogenotriazine series, a 2,3-dichloroquinoxaline-6-carbonyl or a 2,3-dichloroquinoxaline-6-sulphonyl radical,

n, m = 0 or 1, wherein n + m = 1 or 2,

r = 2 or 3.

2. Reactive dyestuffs according to Claim 1 of the formula

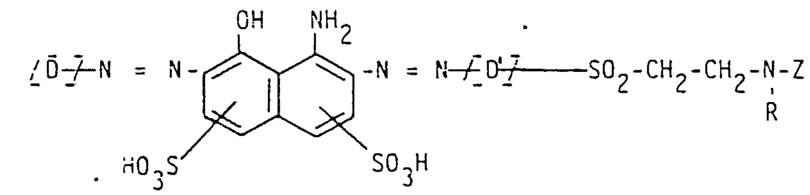

wherein D, D', R and Z have the meaning given in Claim 1.

3. Reactive dyestuffs according to Claim 2, characterised in that D represents a naphthalene mono- or disulphonic acid radical of the formula

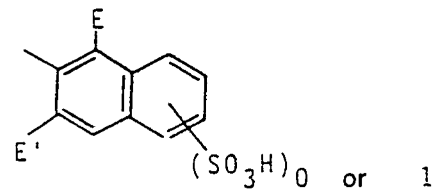

wherein one of the radicals E and E' represents H and the other represents $SO_3H$, or in that D represents an azobenzenesulphonic acid radical of the formula

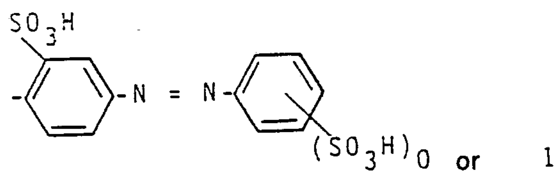

R and Z have the meaning given in Claim 2 and D' represents optionally $C_1$-$C_4$-alkoxy-substituted phenylene or optionally sulpho-substituted naphthylene.

4. Use of reactive dyestuffs according to Claim 1 for dyeing and printing hydroxyl- or amide-group-containing textile material.

5. Hydroxyl- or amide-group-containing textile material dyed or printed with reactive dyestuffs according to Claim 1.

**Revendications**

1. Colorants réactifs de formule

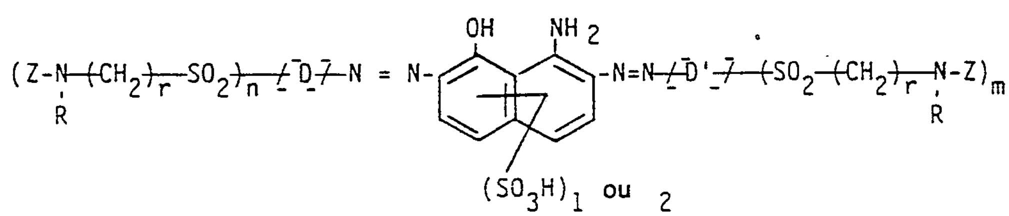

dans laquelle

D, D' = groupe de la série benzénique, naphtalénique ou hétérocyclique contenant éventuellement d'autres groupes azo,

R = H, alkyle en $C_1$-$C_4$ éventuellement substitué, alkylène en $C_2$-$C_4$ éventuellement substitué ou phénylalkylène éventuellement substitué,

Z = groupe réactif avec les fibres de la série des halogénopyrimidines ou des halogénotriazines, groupe 2,3-dichloroquinoxaline-6-carbonyle ou 2,3-dichloroquinoxaline-6-sulfonyle,

n, m = 0 ou 1, avec n + m = 1 ou 2

r = 2 ou 3

2. Colorants réactifs selon la revendication 1, de formule

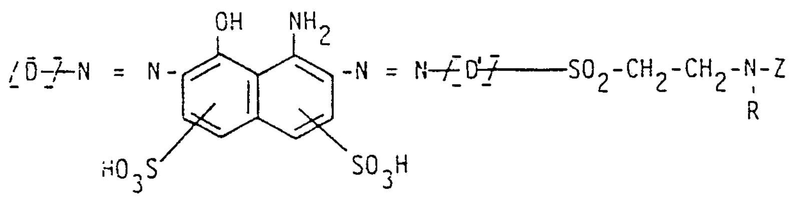

dans laquelle D, D', R et Z ont les significations indiquées dans la revendication 1.

3. Colorants réactifs selon la revendication 2, caractérisés en ce que D représente un radical d'acide naphtalène mono- ou di-sulfonique de formule

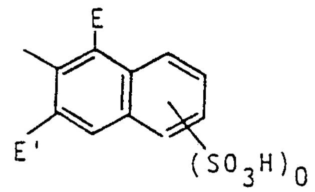

ou 1

dans laquelle l'un des symboles E et E' représente H et l'autre $SO_3H$, ou en ce que D représente un radical d'acide azobenzènesulfonique de formule

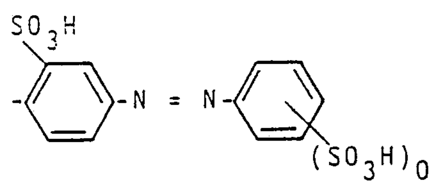

ou 1

R et Z ont les significations indiquées dans la revendication 2 et D' représente un groupe phénylène éventuellement substitué par un groupe alcoxy en $C_1$-$C_4$ ou un groupe naphthylène éventuellement substitué par un groupe sulfo.

4. Utilisation des colorants réactifs selon la revendication 1, pour la teinture et l'impression de matières textiles contenant des groupes hydroxy ou amide.

5. Matière textile contenant des groupes hydroxy ou amide, teinte ou imprimée à l'aide de colorants réactifs selon la revendication 1.